# EUROPÄISCHE PATENTSCHRIFT

(11) **EP 1 338 219 B1**
(45) Veröffentlichungstag und Bekanntmachung des Hinweises auf die Patenterteilung: **26.09.2012**
(21) Anmeldenummer: 03002666.0
(22) Anmeldetag: 11.02.2003
(51) Int. Cl.: A47B 95/04, F25D 25/02, B29C 47/00, B29C 47/06

(54) **Steckprofilelement**
Snap-in profile
Profil enfichable

(30) Priorität: 25.02.2002 DE 10208058
(43) Veröffentlichungstag der Anmeldung: 27.08.2003
(60) Teilanmeldung: 08103989.3
(73) Patentinhaber: BSH Bosch und Siemens Hausgeräte GmbH, 81739 München (DE)
(72) Erfinder: Gerstner, Silvia, 89129 Langenau (DE); Grasy, Siegfried, 89160 Dornstadt (DE); Malisi, Michaela, 89522 Heidenheim (DE); Poidinger, Albert, 89567 Sontheim (DE)

(56) Entgegenhaltungen:
- DE-A- 19 706 285
- GB-A- 1 554 941
- US-A- 5 677 030

## Beschreibung

Die vorliegende Erfindung betrifft ein Steckprofilelement mit zwei eine Nut begrenzenden Schenkeln. Derartige Steckprofilelemente können mit ihrer Nut auf die Ränder von plattenförmigen Teilen aufgesteckt werden, um letztere zu versteifen und/oder vor Beschädigung zu schützen.

Für die Wirksamkeit eines solchen Steckprofilelementes ist ein ausreichend fester Sitz an dem Rand des plattenförmigen Teiles von hoher Bedeutung. Eine gewisse Festigkeit des Sitzes kann durch elastisches Einklemmen des Randes zwischen den Schenkeln erreicht werden, doch ist hierfür eine genaue Anpassung der Breite der Nut an die Dicke des plattenförmigen Abschnittes erforderlich. Je höher die benötigte Klemmkraft ist, um so steifer muss das Steckprofilelement sein um sie zu erzeugen. Je steifer jedoch das Steckprofilelement ist, um so eher führen Streuungen in der Dicke des plattenförmigen Abschnittes dazu, dass kein fester Sitz des Steckprofilelementes erreicht werden kann oder das Aufstecken des Steckprofilelementes mit extremen Schwierigkeiten verbunden oder unmöglich ist und der Versuch des Aufsteckens gar zur Beschädigung des Randes führt. Dieses Problem stellt sich insbesondere bei einem Steckprofilelement, das als Schutz für den Rand einer Platte aus Flachglas vorgesehen ist, da die Herstellung solcher Platten mit Stärkentoleranzen unter 0.1 mm sehr aufwendig ist.

Ein solcher fester Sitz kann selbstverständlich hergestellt werden durch Verkleben des Steckprofilelementes an dem plattenförmigen Abschnitt, doch erfordert dies neben dem Aufstecken noch einen zusätzlichen Arbeitsschritt zum Aufbringen oder Aktivieren eines Klebers. Eine andere Möglichkeit ist, das Steckprofilelement zu verrasten, doch werden hierfür komplementäre Rasteinrichtungen am Steckprofilelement und dem plattenförmigen Abschnitt benötigt, die die Herstellung beider verteuern.

US 5 677 030 A betrifft ein Steckprofil, dass im Querschnitt im Wesentlichen U-förmig ausgebildet ist und an der Innenseite eines U-Profilschenkels mit einem Vorsprung ausgestattet ist, der aus einem Werkstoff besteht, der biegsamer ausgebildet ist als der Werkstoff des Steckprofils. Das Steckprofil ist auf eine Ablagefläche aus Glas aufschiebbar, wobei dann der Vorsprung an der ihm zugewandten Außenfläche der Glasablagefläche anliegt und somit das Steckprofil gegenüber der Ablagefläche aus Glas abdichtet.

WO 97/19621 A offenbart eine Kühl- oder Gefriervitrine, deren Kühl- oder Gefrierraum mit gleitgeführten Abdeckungen abgedeckt ist. Die Kühl- oder Gefriervitrine weist eine Öffnung auf, durch welche der Innenraum der Kühl- oder Gefriervitrine von außerhalb der Kühl- oder Gefriervitrine zugänglich ist. Die gleitgeführten Abdeckungen sind in der Öffnung angeordnet und weist zwei Abdeckungsteile auf, die von einer Schließposition in einer Öffnungsposition bewegbar sind. Die gleitgeführten Abdeckungen weisen zwei im Wesentlichen parallel zueinander angeordnete Schienen auf, welche sich entlang zwei gegenüberliegender Ränder der Öffnung erstrecken, wobei die gleitgeführten Abdeckungen zwischen den oben genannten Positionen bewegbar sind.

Aufgabe der Erfindung ist daher, ein Kühlgerät mit einem Innenteil, das mit einem Steckprofilelement ausgestattet ist, vorzusehen, wobei das Steckprofilelement derart ausgestaltet ist, ein Eindringen von Flüssigkeiten in eine Nut des Steckprofilelements zu verhindern.

Die Aufgabe wird gelöst durch ein Steckprofil mit den Merkmalen des Anspruches 1. Infolge der unterschiedlichen Härten der zwei Werkstoffe wird beim Aufstecken des Steckprofilelementes auf einen plattenförmigen Abschnitt im wesentlichen der relativ weiche Vorsprung verformt, wenn er zwischen dem plattenförmigen Abschnitt und dem Schenkel, an dem er angebracht ist, eingeklemmt wird. Er ermöglicht das Einklemmen von Platten mit in einem vergleichsweise weiten Toleranzbereich streuender Stärke, wobei die realisierbare Klemmkraft weniger durch die (vergleichsweise niedrige) Steife des zweiten Werkstoffs bestimmt ist als durch die demgegenüber größere des ersten, die Schenkel und deren Verbindung bildenden Werkstoffs.

Vorzugsweise handelt es sich bei dem Vorsprung um eine elastische Lippe, die sich in einem entspannten Zustand von der Seitenfläche aus zur Mitte und zum Boden der Nut hin, also unter einem schrägen Winkel zu einer gedachten Mittelebene der Nut, erstreckt. Durch die Orientierung der Lippe zum Boden der Nut hin wird erreicht, dass diese beim Aufstecken des Steckprofilelementes auf den plattenförmigen Abschnitt flach gegen die Seitenfläche des Schenkels gedrückt wird und von der vom plattenförmigen Abschnitt ausgeübten Reibungskraft in die Länge gezogen wird. Dadurch verringert sich die wirksame Dicke der Lippe, und die beim Aufstecken des Steckprofilelementes zu überwindende Reibung ist gering. Wenn jedoch eine Zugkraft in entgegengesetzter Richtung auf das Steckprofilelement wirkt, so bewirkt diese eine Stauchung der zwischen Schenkel und Plattenabschnitt eingeklemmten Lippe, durch die deren Dicke zunehmen würde, wenn sie nicht von Schenkel und Plattenabschnitt daran gehindert würde. Dies führt zu einer erheblichen Zunahme der Reibung, so dass das Abziehen des Steckprofilelementes von dem Plattenabschnitt allenfalls mit erheblich größerem Kraftaufwand möglich ist als das Aufstecken.

Um ein Abziehen des Steckprofilelementes dennoch nicht übermäßig zu erschweren, ist es zweckmäßig, wenn die Lippe in eine Orientierung schwenkbar ist, in der sie sich von der Seitenfläche aus zur Mitte und zur Öffnung der Nut hin erstreckt. Das heißt, wenn beim Abziehen des Steckprofilelementes vom Plattenabschnitt ein anfänglicher Widerstand überwunden ist und die Lippe in diese Orientierung geschwenkt ist, ist der zum vollständigen Entfernen des Steckprofilelementes vom Plattenabschnitt erforderliche Kraftaufwand nicht mehr wesentlich verschieden von dem zum Aufstecken benötigten.

Unter dem Gesichtspunkt der Festigkeit und der einfachen Herstellbarkeit ist bevorzugt, dass die Lippe sich über die gesamte Länge der Nut erstreckt.

Der Vorsprung hängt vorzugsweise einteilig mit einem Fuß zusammen, der in eine in der Seitenfläche gebildete Aussparung eingreift. Eine solche Aussparung, die sowohl einen engen, schlitzförmigen als auch einen weiten Querschnitt geringer Tiefe haben kann, vergrößert die Kontaktfläche zwischen den zwei Werkstoffen und verbessert somit den Halt beider aneinander.

Das Vorhandensein mehrerer in Tiefenrichtung der Nut gestaffelter erster Vorsprünge an der Seitenfläche verhindert ein Verkippen des Steckprofilelementes und des Plattenabschnitts gegeneinander um eine zur Längsrichtung des Steckprofilelements parallele Achse, außerdem trägt jeder einzelne Vorsprung für sich zur Haltekraft des Steckprofilelementes bei.

Es können beide Schenkel oder nur ein einzelner Schenkel des Steckprofilelementes mit wenigstens je einem ersten Vorsprung versehen sein.

Darüber hinaus kann an wenigstens einem Schenkel ein zweiter in die Nut hinein gerichteter Vorsprung vorhanden sein, der näher an der Öffnung der Nut angeordnet ist als der erste Vorsprung und weniger weit in die Nut eingreift als dieser. Ein solcher zweiter Vorsprung, der nicht notwendigerweise mit dem eingeschobenen Plattenabschnitt in Kontakt kommen muß, dient dazu, das Eindringen von Flüssigkeiten in die Nut zu verhindern, die, wenn sie in Kontakt mit dem ersten Vorsprung trocknen, diesen am Plattenabschnitt verkleben und so ein Entfernen des Steckprofilelementes ohne Beschädigung unmöglich machen könnten.

Einer bevorzugten Ausgestaltung des Steckprofilelementes zufolge, die insbesondere als Schutzprofil für einen Fachboden eines Kältegerätes brauchbar ist, sind die zwei Schenkel spiegelbildlich zueinander geformt.

Einer anderen bevorzugten Ausgestaltung zufolge, die vorzugsweise an einem Auszugkasten oder einem Türabsteller einer Kältegerätes eingesetzt wird, ist einer der zwei Schenkel über die Öffnung der Nut hinaus zu einem Schild verlängert, das insbesondere als gestalterisches Element an den Sichtseiten der Türabsteller oder Auszugkästen dienen kann. Um zu verhindern, dass z.B. spielende Kinder die freien Ränder eines solchen Schildes leicht fassen und den Schild verbiegen können, ist an einer solchen Sichtseite vorzugsweise eine Vertiefung mit an die Form des Schildes angepaßter Form gebildet, in die dessen Ränder auf wenigstens einem Teil ihrer Stärke eingreifen.

Um zu verhindern, dass Ecken des Schildes von dem Auszugkasten oder Türabsteller abstehen, ist der Schild vorzugsweise in Längsrichtung mit der Nut zugewandter Konkavität gekrümmt, und/oder Schenkel und Schild sind so angebracht, dass sich ein vom Boden der Nut zu ihrer Öffnung hin verjungter Querschnitt der Nut ergibt. Wenn der Krümmungsradius des Schildes kleiner als ein entsprechender Krümmungsradius des plattenförmigen Abschnittes des Auszugkastens oder Türabstellers ist, auf den das Steckprofilelement aufgesteckt wird, drücken die Ecken des Schildes elastisch gegen den plattenförmigen Abschnitt und spreizen sich nicht von diesem ab.

Das erfindungsgemäße Steckprofil kann in einfacher Weise durch Co-Extrusion der zwei Werkstoffe hergestellt werden; alternativ kann es als Spritzgussteil, ggf. in zwei aufeinanderfolgenden Spritzgussschritten für die zwei Werkstoffe, gefertigt werden.

Weitere Merkmale und Vorteile der Erfindung ergeben sich aus der nachfolgenden Beschreibung von Ausführungsbeispielen mit Bezug auf die beigefügten Figuren. Es zeigen:
- Fig. 1: eine auseinandergezogene Ansicht eines Kühlgutträgers für ein Kältegerät mit Steckprofilelementen, die nicht der Erfindung entsprechen;
- Fig. 2: einen Querschnitt durch ein Steckprofilelement, das nicht der Erfindung entspricht;
- Fig. 3: einen Querschnitt durch eine abgewandelte Ausgestaltung des Steckprofilelementes entsprechend der vorliegenden Erfindung;
- Fig. 4: das Steckprofilelement aus Fig. 3 in auf den Rand einer Platte aufgestecktem Zustand;

Fig. 5, Fig. 6, Fig. 7, Fig. 8, Fig. 9 und Fig. 10 zeigen Ausführungsformen, die nicht der Erfindung entsprechen.

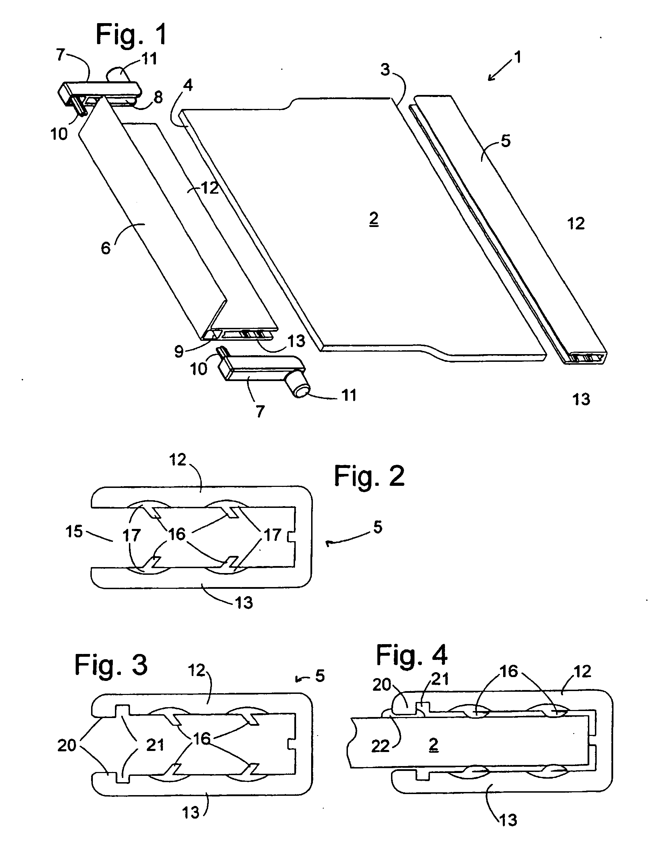

Fig. 1 zeigt einen Fachboden 1 (nicht der Erfindung entsprechend) für ein Kältegerät in einer auseinandergezogenen perspektivischen Darstellung. Er ist aufgebaut aus einer Trägerplatte 2 aus Glas oder transparentem Kunststoff, auf deren vorderen und hinteren Rand 3, 4 jeweils ein langgestrecktes Steckprofilelement 5, 6 aufgesteckt ist. Die Steckprofilelemente 5, 6 versteifen die Trägerplatte 2 in deren Breitenrichtung, außerdem dient das vordere Steckprofilelement 5 als Schutz des vorderen Randes 3 vor Beschädigung, z.B. durch Behälter, die beim Einladen in das Kältegerät versehentlich gegen den Fachboden 1 gestoßen werden.

Zwei seitliche Abschlusselemente 7 begrenzen das Steckprofilelement 6 an seinen Längsenden. Sie weisen jeweils auf einer Längsseite eine Nut 8 zum Aufstecken auf einen seitlichen Randabschnitt der Trägerplatte 2 auf und können daher auch als Steckprofilelemente angesehen werden. Jedes Abschlusselement 7 trägt einen in einen hohlen Kanal 9 des hinteren Steckprofilelementes 6 einsteckbaren Stift 10; auf der der Nut 8 und dem Stift 10 gegenüberliegenden Seite der Abschlusselemente 7 ist jeweils ein Zapfen 11 angeformt, mit dem der Fachboden 1 auf einer an der Seitenwand des Innenbehälters des Kältegerätes geformten Trägerfläche ruht.

Die Steckprofilelemente 5, 6, 7 haben jeweils einen Querschnitt mit zwei parallelen Schenkeln 12, 13, die durch einen Steg 14 verbunden sind und eine Nut 15 begrenzen, in die jeweils ein Rand 3 oder 4 der Trägerplatte 2 einsteckbar ist. An den der Nut 15 zugewandten Seitenflächen der Schenkel 12, 13 sind jeweils zwei sich über die gesamte Länge des betreffenden Steckprofilelementes 5 bzw. 6 erstreckende Vorsprünge 16 angeordnet. Diese Vorsprünge 16 bestehen aus einem anderen, leichter verformbaren Werkstoff als der Rest des Elementes 5 bzw. 6. Die Vorsprünge 16 können z. B. aus einem thermoplastischen Elastomer bestehen, während für die anderen Teile des Abschlusselementes ein steifer, zäher Kunststoff wie etwa Polystyrol bevorzugt ist.

Die Außenflächen der Steckprofilelemente 5, 6 sind mit einer metallischen oder einer eine metallische Oberfläche imitierenden Folie überzogen, um so den Steckprofilelementen 5, 6 das Aussehen zu verleihen, als ob sie aus einem Metall, insbesondere Aluminium oder Edelstahl, bestünden. Da sie jedoch im Inneren aus Kunststoffmaterial bestehen, erscheinen die Steckprofilelemente 5, 6 bei Berührung für einen Benutzer weniger unangenehm kalt als entsprechende Elemente aus Metall.

Die Steckprofilelemente 5, 6 sind in einem Strangguß- oder Strangpreßverfahren durch Co-Extrusion der zwei verschiedenen Werkstoffe gefertigt.

Im Gegensatz dazu sind die unregelmäßig geformten Abschlusselemente 7 im Spritzguss realisiert. Dabei können auch diese an den der Nut 8 zugewandten Seitenflächen ihrer parallelen Schenkel mit zu den Vorsprüngen 16 analogen Vorsprüngen versehen sein, die aus einem weicheren, flexibleren Material bestehen als der Rest eines solchen Abschlusselementes 7.

Fig. 2 zeigt eine Ausgestaltung eines Querschnittes des vorderen Steckprofilelementes 5 (nicht der Erfindung entsprechend). Die im folgenden beschriebenen Besonderheiten dieses Querschnittes sind jedoch ohne weiteres auch auf das hintere Steckprofilelement 6 bzw. die Abschlusselemente 7 übertragbar.

Zwei lippenförmige Vorsprünge 16 erstrecken sich an jeder der Nut 15 zugewandten Innenfläche des Schenkels 12 bzw. 13. Sie sind schräg zur Mitte und zum Boden der Nut 15 hin orientiert, so dass sie beim Aufschieben des Steckprofilelementes 5 auf den Rand 3 leicht gegen die Innenfläche des jeweiligen Schenkels 12 bzw. 13 gedrückt werden können und so dem Aufstecken nur geringen Widerstand entgegensetzen, beim Abziehen von dem Rand 3 hingegen gestaucht werden, und so einen festen Halt des Steckprofilelementes 5 an dem Rand 3 gewährleisten.

Die Vorsprünge 16 hängen jeweils einteilig mit einem Fuß 17 zusammen, der jeweils in einer Aussparung 18 des Schenkels 12 bzw. 13 bündig eingelassen ist.

Die Aussparung 18 ist beim hier gezeigten Ausführungsbeispiel kreissegmentförmig mit einer im Vergleich zu ihrer Breite geringen Tiefe, und der Vorsprung 16 geht in den Fuß 17 etwa in Höhe der Mitte desselben über. Durch diese Formgebung wird erreicht, dass eine auf den Vorsprung 16 wirkende Kraft sich innerhalb des Fußes 17 verteilt und nicht zu einer Ablösung des Fußes 18 vom Körper des Steckprofilelementes 5 führen kann.

Fig. 3 zeigt einen Querschnitt des Steckprofilelementes 5 gemäß einer abgewandelten Ausgestaltung. Diese unterscheidet sich von der in Fig. 2 gezeigten (nicht der Erfindung entsprechenden) Ausgestaltung durch das Vorhandensein zweiter Vorsprünge 20 an den Schenkeln 12, 13 in Höhe der Öffnung der Nut 15. Diese zweiten Vorsprünge 20 sind von dem Hauptteil der Innenflächen der Schenkel 12, 13 durch eine Rille 21 abgesetzt.

Fig. 4 zeigt das gleiche Steckprofilelement wie Fig. 3, allerdings mit in die Nut 15 eingeschobener Trägerplatte 2. Die Vorsprünge 16 sind jeweils zum Boden der Nut 15 hin abgelenkt und zwischen den Schenkeln 12, 13 und der Trägerplatte 2 flachgedrückt.

Wenn auf der Platte 2 Flüssigkeit verspritzt wird und Tropfen mit dem Steckprofilelement 5 in Kontakt kommen, so neigt ein solcher Tropfen 22 durch Kapillareffekt dazu, in den schmalen Spalt zwischen dem zweiten Vorsprung 20 und der Trägerplatte 2 einzudringen. Die Rille 21 verhindert ein weiteres Vordringen des Tropfens in die Nut 15, so dass dieser mit den Vorsprüngen 16 nicht in Kontakt kommt. Wenn der Tropfen verdunstet, führen eventuelle klebrige Rückstände nicht zu einem Aneinanderkleben des Steckprofilelementes 5 und der Trägerplatte 2, so dass es möglich bleibt, beide ohne Gefahr einer Beschädigung voneinander zu trennen.

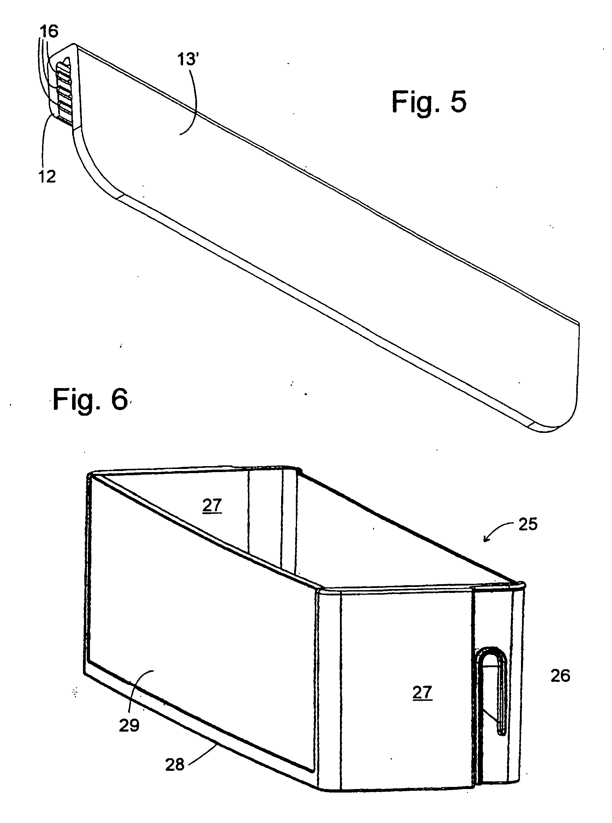

Fig. 5 zeigt eine perspektivische Ansicht eines Steckprofilelementes gemäß einer Ausgestaltung, die nicht der Erfindung entspricht. Bei dieser Ausgestaltung sind die zwei Schenkel 12, 13' des Profilelementes unterschiedlich lang, der Schenkel 13' ist über die Öffnung der Nut 15 hinaus zu einer großflächigen Platte oder einem Schild verlängert. Ein derartiges Steckprofilelement ist als Dekorelement für einen Türabsteller 25 eines Kühlgerätes, wie in Fig. 6 gezeigt (nicht der Erfindung entsprechend), vorgesehen. Der Türabsteller 25 ist ein oben offener Kasten aus Kunststoff, mit jeweils einen hakenförmig gebogenen Steg 26 an jeder seiner Stirnseiten 27, die in an sich bekannter Weise zum Einhängen an Holmen einer Türinnenverkleidung vorgesehen sind. Eine dem Kühlschrankinneren zugewandte Frontseite 28 weist eine großflächige Vertiefung 29 auf. Das Steckprofilelement der Fig. 5 ist vorgesehen, um von oben auf die Frontseite 28 des Türabstellers 25 aufgesteckt zu werden, so dass der zum Schild vergrößerte Schenkel 13' formschlüssig in die Vertiefung 29 eingreift.

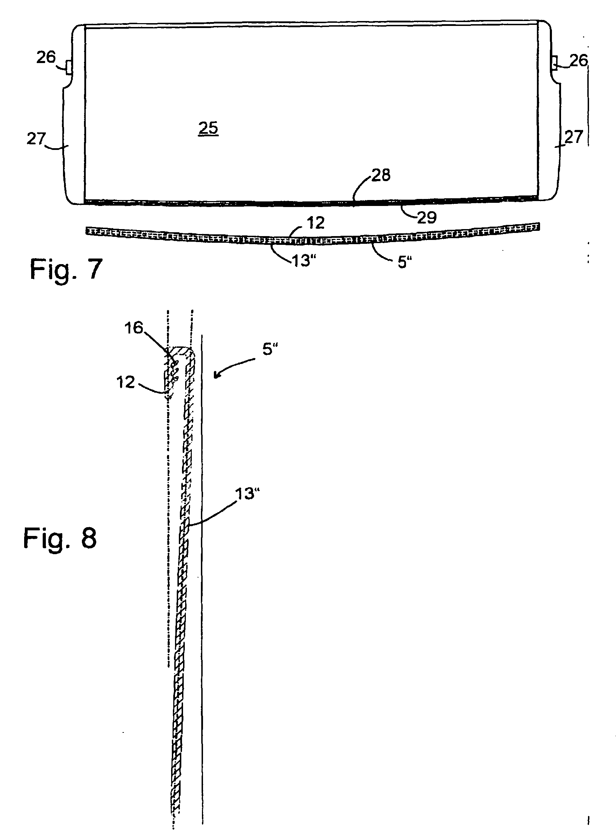

Fig. 7 zeigt eine Draufsicht auf den Türabsteller 25 und einen zum Aufstecken auf dessen Frontseite 28 vorgesehenes Steckprofilelement 5" (nicht der Erfindung entsprechend). Die Frontseite 28 ist geringfügig nach außen vorgewölbt; das Steckprofilelement 5" und insbesondere dessen Schild 13" ist in gleiche Richtung, allerdings mit deutlich kleinerem Krümmungsradius gewölbt. Durch die unterschiedlichen Krümmungen ist gewährleistet, dass der Schild 13" an seinen seitlichen Rändern exakt an der Oberfläche der Vertiefung 29 anliegt.

Fig. 8 zeigt einen Querschnitt durch das Steckprofilelement 5" (nicht der Erfindung entsprechend). Anhand der in der Fig. gezeigten gestrichelten Linien ist deutlich zu erkennen, dass der Schenkel 12 und der Schild 13" des Steckprofilelementes 5" nicht exakt parallel sind, sondern zum freien Rand des Schildes 13" hin, in Fig. 8 nach unten, konvergieren. Dies sowie die Tatsache, dass elastische Vorsprünge 16 nur am Schenkel 12, nicht aber am Schild 13" vorhanden sind, bewirkt, dass der freie untere Rand des Schildes 13" in am Türabsteller 25 montierten Zustand elastisch gegen die Oberfläche der Vertiefung 29 drückt. Der Schild 13" liegt somit jeweils auf der gesamten Länge seiner seitlichen Ränder und seines unteren Randes an der Oberfläche der Vertiefung 29 an und drückt elastisch gegen diese. Abstehende Ränder des Schildes 13" werden so vermieden, der Schild 13" mutet an, als wäre er am Türabsteller 25 verklebt, ohne es tatsächlich zu sein.

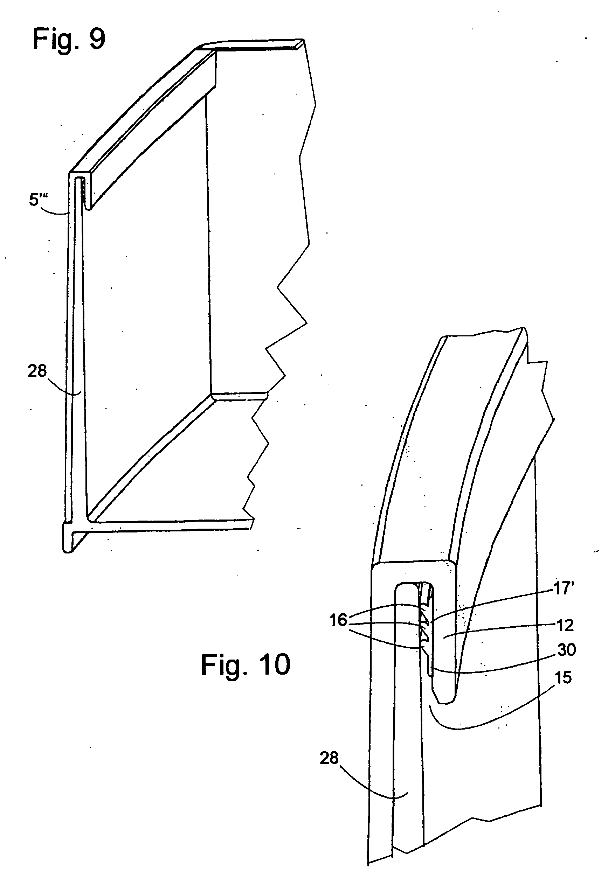

Fig. 9 zeigt ein Detail eines Türabstellers (nicht der Erfindung entsprechend), teils in Perspektive, teils geschnitten. Der Schnitt erstreckt sich durch die Frontseite 28 und ein darauf aufgestecktes Steckprofilelement 5"'. Dieses unterscheidet sich vom in Fig. 8 gezeigten lediglich im Bereich der Vorsprünge 16. Während bei der Ausgestaltung der Fig. 8 jeder der Vorsprünge 16 durch einen eigenen Fuß am Schenkel 12 verankert ist, hängen hier die drei Vorsprünge 16, wie in Fig. 10 vergrößert gezeigt (nicht der Erfindung entsprechend), über einen gemeinsamen Fuß 17' einteilig zusammen. Dieser ist auch nicht in den Schenkel 12 eingetieft, sondern haftet oberflächlich an dessen Innenseite. Um zu verhindern, dass die Vorsprünge 16 beim Aufstecken des Steckprofilelementes auf die Frontseite 28 vom Schenkel 12 abgezogen werden, weist der Fuß 17' zwischen der Öff- nung der Nut 15 und dem der Öffnung am nächsten gelegenen Vorsprung 16 eine an der Innenfläche haftende, flache Zunge 30 auf, die beim Einstecken auf den äußersten Vorsprung 16 ausgeübte Zugkräfte im Fuß 17' verteilt.

## Patentansprüche

1. Kühlgerät mit einem Innenteil, das mit einem Steckprofilelement (5, 5',..., 6, 7) ausgestattet ist, das zwei eine Nut (15) begrenzende, miteinander verbundene Schenkel (12; 13, 13'...) aus einem ersten Werkstoff aufweist und das auf einen plattenförmigen Abschnitt (2, 28) mit einem Rand aufsteckbar ist, wobei an der der Nut (15) zugewandten Seitenfläche wenigstens einer der Schenkel (12;13,13'...) wenigstens auf einem Teil der Länge der Nut (15) ein erster in die Nut hinein gerichteter Vorsprung (16) aus einem zweiten Werkstoff angebracht ist, der biegsamer als der erste Werkstoff ist, **dadurch gekennzeichnet, dass** an wenigstens einem Schenkel (12, 13) ein zweiter in die Nut (15) hinein gerichteter Vorsprung (20) vorhanden ist, der näher an der Öffnung der Nut (15) als der erste Vorsprung (16) angeordnet ist und weniger weit in die Nut (15) eingreift als der erste Vorsprung (16), und dass der zweite Vorsprung (20) von einem Hauptteil einer Innenfläche des Schenkels (12, 13) durch eine Rille (21) abgesetzt ist.

2. Kühlgerät nach Anspruch 1, **dadurch gekennzeichnet, dass** der erste Vorsprung (16) eine elastische Lippe ist, die sich in einem entspannten Zustand von der Seitenfläche aus zur Mitte und zum Boden der Nut (15) hin erstreckt.

3. Kühlgerät nach Anspruch 2, **dadurch gekennzeichnet, dass** die Lippe (16) in eine Orientierung schwenkbar ist, in der sie sich von der Seitenfläche aus zur Mitte und zur Öffnung der Nut (15) hin erstreckt.

4. Kühlgerät nach einem der vorhergehenden Ansprüche, **dadurch gekennzeichnet, dass** der Vorsprung (16) sich über die gesamte Länge der Nut erstreckt.

5. Kühlgerät nach einem der vorhergehenden Ansprüche, **dadurch gekennzeichnet, dass** der Vorsprung (16) einteilig mit einem Fuss (17) zusammenhängt, der in eine in der Seitenfläche gebildete Aussparung eingreift.

6. Kühlgerät nach einem der vorhergehenden Ansprüche, **dadurch gekennzeichnet, dass** mehrere erste Vorsprünge (16) in Tiefenrichtung der Nut (15) gestaffelt an der Seitenfläche angeordnet sind.

7. Kühlgerät nach Anspruch 6, **dadurch gekennzeichnet, dass** die mehreren ersten Vorsprünge (16) mit einem gemeinsamen Fuss (17') einteilig zusammenhängen.

8. Kühlgerät nach einem der vorhergehenden Ansprüche, **dadurch gekennzeichnet, dass** beide Schenkel (12; 13, 13'...) wenigstens je einen ersten Vorsprung (16) aufweisen.

9. Kühlgerät nach einem der vorhergehenden Ansprüche, **dadurch gekennzeichnet, dass** die zwei Schenkel (12, 13) spiegelbildlich zueinander geformt sind.

10. Kühlgerät nach einem der Ansprüche 1 bis 8, **dadurch gekennzeichnet, dass** einer der zwei Schenkel über die Öffnung der Nut (15) hinaus zu einem Schild (13', 13") verlängert ist.

11. Kühlgerät nach Anspruch 10, **dadurch gekennzeichnet, dass** der Schild (13") in Längsrichtung der Nut (15) mit der Nut (15) zugewandter Konkavität gekrümmt ist.

12. Kühlgerät nach Anspruch 10 oder 11, **dadurch gekennzeichnet, dass** der Schild (13") und der andere Schenkel (12) in Richtung ihrer freien Ränder aufeinander zulaufen.

13. Kühlgerät nach einem der Ansprüche 1 bis 12, **dadurch gekennzeichnet, dass** das Innenteil ein Fachboden (1) ist.

14. Kühlgerät nach einem der Ansprüche 10 bis 12, **dadurch gekennzeichnet, dass** der plattenförmige Abschnitt (28) eine Vertiefung (29) zum Aufnehmen des Schildes (13") aufweist, und dass der Krümmungsradius des Schildes (13") in Längsrichtung der Nut (15) kleiner als ein entsprechender Krümmungsradius des plattenförmigen Abschnitts (28) ist.

## Claims

1. Cooling appliance with an inner part equipped with a plug profile element (5, 5', ..., 6, 7), which comprises two interconnected limbs (12; 13, 13' ...) of a first material, the limbs bounding a groove (15), and which can be plugged by an edge onto a plate-shaped section (2, 28), wherein at the side surface, which faces the groove (15), of at least one of the limbs (12; 13, 13' ...) a first projection (16), which is directed into the groove, of a second material is formed at least on a part of the length of the groove (15) and is more flexible than the first material, **characterised in that** a second projection (20), which is directed into the groove (15) and which is arranged closer to the opening of the groove (15) than the first projection (16) and engages less far into the groove (15) than the first projection (16), is present at at least one limb (12, 13) and that the second projection (20) is offset from a main part of an inner surface of the limb (12, 13) by a channel (21).

2. Cooling appliance according to claim 1, **characterised in that** the first projection (16) is a resilient lip which in a relaxed state extends out from the side surface towards the middle and the base of the groove (15).

3. Cooling appliance according to claim 2, **characterised in that** the lip (16) is pivotable into an orientation in which it extends out from the side surface towards the middle and the opening of the groove (15).

4. Cooling appliance according to any one of the preceding claims, **characterised in that** the projection (16) extends over the entire length of the groove.

5. Cooling appliance according to any one of the preceding claims, **characterised in that** the projection (16) is connected integrally with a foot (17) which engages in a cut-out formed in the side surface.

6. Cooling appliance according to any one of the preceding claims, **characterised in that** several first projections (16) are arranged at the side surface to the staggered in the depth direction of the groove (15).

7. Cooling appliance according to claim 6, **characterised in that** the several first projections (16) are integrally connected with a common foot (17').

8. Cooling appliance according to any one of the preceding claims, **characterised in that** the two limbs (12; 13, 13' ...) each have at least one respective first projection (16).

9. Cooling appliance according to any one of the preceding claims, **characterised in that** the two limbs (12, 13) are formed in mirror image with respect to one another.

10. Cooling appliance according to any one of claims 1 to 8, **characterised in that** one of the two limbs is prolonged beyond the opening of the groove (15) to form a panel (13', 13").

11. Cooling appliance according to claim 10, **characterised in that** the panel (13") is curved in longitudinal direction of the groove (15) with a concavity facing the groove (15).

12. Cooling appliance according to claim 10 or 11, **characterised in that** the panel (13") and the other limb (12) run onto one another in the direction of the free edges thereof.

13. Cooling appliance according to any one of claims 1 to 12, **characterised in that** the inner part is a compartment base (1).

14. Cooling appliance according to any one of claims 10 to 12, **characterised in that** the plate-shaped section (28) has a recess (29) for reception of the panel (13") and that the radius of curvature of the panel (13") in the longitudinal direction of the groove (15) is smaller than a corresponding radius of curvature of the plate-shaped section (28).

## Revendications

1. Appareil frigorifique avec un élément intérieur qui est pourvu d'un élément profilé à emboîter (5, 5',..., 6, 7) qui comprend deux branches (12; 13, 13'...) formées d'un premier matériau reliées l'une à l'autre et limitant une rainure (15) et qui peut être emboîté, avec un bord, sur une section en forme de plaque (2, 28), au moins une des branches (12; 13, 13'...) étant pourvue, sur sa surface latérale située du côté de la rainure (15), au moins sur une partie de la longueur de la rainure (15), d'une première saillie (16) dirigée à l'intérieur de la rainure, formée d'un second matériau qui est plus flexible que le premier matériau, **caractérisé en ce qu'**au moins une branche (12, 13) est pourvue d'une seconde saillie (20) dirigée à l'intérieur de la rainure (15), qui est plus proche de l'ouverture de la rainure (15) que la première saillie (16) et s'engage moins loin dans la rainure (15) que la première saillie (16), et **en ce que** la seconde saillie (20) est étagée d'une partie principale de la surface intérieure de la branche (12, 13) par une cannelure (21).

2. Appareil frigorifique selon la revendication 1, **caractérisé en ce que** la première saillie (16) est une lèvre élastique qui, à l'état non contraint, s'étend de la surface latérale vers le centre et vers le fond de la rainure (15).

3. Appareil frigorifique selon la revendication 2, **caractérisé en ce que** la lèvre (16) peut être basculée dans une orientation dans laquelle elle s'étend de la surface latérale vers le centre et vers l'ouverture de la rainure (15).

4. Appareil frigorifique selon l'une des revendications précédentes, **caractérisé en ce que** la saillie (16) s'étend sur toute la longueur de la rainure.

5. Appareil frigorifique selon l'une des revendications précédentes, **caractérisé en ce que** la saillie (16) est liée d'un seul tenant à un pied (17) qui est emboîté dans un évidement formé dans la surface latérale.

6. Appareil frigorifique selon l'une des revendications précédentes, **caractérisé en ce que** plusieurs premières saillies (16) sont échelonnées sur la surface latérale dans le sens de la profondeur de la rainure (15).

7. Appareil frigorifique selon la revendication 6, **caractérisé en ce que** les plusieurs premières saillies (16) sont liées d'un seul tenant à un pied commun (17') .

8. Appareil frigorifique selon l'une des revendications précédentes, **caractérisé en ce que** les deux branches (12; 13, 13'...) sont pourvues au moins chacune d'une première saillie (16).

9. Appareil frigorifique selon l'une des revendications précédentes, **caractérisé en ce que** les deux branches (12, 13) sont formées de manière symétrique l'une par rapport à l'autre.

10. Appareil frigorifique selon l'une des revendications 1 à 8, **caractérisé en ce que** l'une des deux branches est prolongée au-delà de l'ouverture de la rainure (15) pour former un panneau (13', 13").

11. Appareil frigorifique selon la revendication 10, **caractérisé en ce que** le panneau (13") présente une courbure concave tournée vers la rainure (15) dans la direction longitudinale de la rainure (15).

12. Appareil frigorifique selon la revendication 10 ou 11, **caractérisé en ce que** le panneau (13") et l'autre branche (12) s'étendent l'un vers l'autre en direction de leurs bords libres.

13. Appareil frigorifique selon les revendications 1 à 12, **caractérisé en ce que** l'élément intérieur est un fond de compartiment (1).

14. Appareil frigorifique selon l'une des revendications 10 à 12, **caractérisé en ce que** la section en forme de plaque (28) est pourvue d'une cavité (29) pour la réception du panneau (13") et **en ce que** le rayon de courbure du panneau (13") dans la direction longitudinale de la rainure (15) est plus petit qu'un rayon de courbure correspondant de la section en forme de plaque (28).
